**Europäisches Patentamt**

**European Patent Office**

**Office européen des brevets**

(19)

(11) Veröffentlichungsnummer: **0 366 889 B1**

(12) ## EUROPÄISCHE PATENTSCHRIFT

(45) Veröffentlichungstag der Patentschrift: **24.11.93**

(51) Int. Cl.⁵: **A47C 3/30**

(21) Anmeldenummer: **89115433.8**

(22) Anmeldetag: **22.08.89**

(54) **Längenverstellbare Säule für Stühle, Tische oder dergleichen.**

(30) Priorität: **06.10.88 DE 3833959**

(43) Veröffentlichungstag der Anmeldung:
**09.05.90 Patentblatt 90/19**

(45) Bekanntmachung des Hinweises auf die
Patenterteilung:
**24.11.93 Patentblatt 93/47**

(84) Benannte Vertragsstaaten:
**AT BE CH DE ES FR GB IT LI NL SE**

(56) Entgegenhaltungen:
**DE-U- 8 524 341**
**FR-A- 2 287 192**

(73) Patentinhaber: **SUSPA COMPART Aktienge-**
**sellschaft**
**Industriestrasse 12-14**
**D-90518 Altdorf(DE)**

(72) Erfinder: **Bauer, Hans Jürgen**
**Am Eichenhain 8**
**D-8503 Altdorf(DE)**
Erfinder: **Bauer, Hans-Peter**
**Ziegelhütte 9**
**D-8503 Altdorf(DE)**

(74) Vertreter: **Rau, Manfred, Dr. Dipl.-Ing. et al**
**Rau, Schneck & Hübner**
**Patentanwälte**
**Königstrasse 2**
**D-90402 Nürnberg (DE)**

EP 0 366 889 B1

## Beschreibung

Die Erfindung betrifft eine längenverstellbare Säule nach dem Oberbegriff des Anspruches 1.

Derartige längenverstellbare Säulen sind aus der US-A-4 245 826 (entsprechend DE-U-76 23 238) bekannt. Bei diesen bekannten Säulen ist der untere Rand des Standrohres radial nach innen umgebördelt, so daß die Bodenplatte auf diesen Rand aufgelegt werden kann. Zur Oberseite der Bodenplatte erfolgt eine Sicherung durch eine in das Standrohr eingeformte Sicke.

Eine weitere Ausgestaltung ist aus der DE-U1-85 24 341 bekannt, wobei der untere Rand des Standrohres allerdings lediglich schräg nach innen umgebogen ist, so daß die Bodenplatte nicht flächig auf diesem Rand aufliegt.

Aus der FR-A-2 287 192 (entsprechend DE-U-7 434 102) ist eine zur Höhenverstellung von Stühlen dienende Gasfeder bekannt, deren Kolbenstange als Rohr ausgebildet ist. Am im Gehäuse der Gasfeder befindlichen Ende der Kolbenstange ist ein ringförmiger Kolben angebracht, der auf einer Stirnseite eines nach außen umgebogenen Randes aufliegt.

Der Erfindung liegt die Aufgabe zugrunde, eine Säule der gattungsgemäßen Art so weiterzubilden, daß mit geringem Fertigungsaufwand eine Abstützung der Bodenplatte gegen extrem hohe Kräfte in Achsrichtung der Säule gewährleistet ist.

Diese Aufgabe wird erfindungsgemäß durch die Merkmale im Kennzeichnungsteil des Anspruchs 1 gelöst. Wesentlich für die Erfindung ist, daß der untere Rand der Säule wulstförmig nach innen verformt ist, so daß der Rand eine Rinne bildet, die in Achsrichtung und nach innen in das Standrohr hinein offen ist. Auf der in deutlichem Abstand von der Innenwand des Standrohres befindlichen Stirnfläche des Randes stützt sich die Bodenplatte ab. Diese Stirnfläche liegt etwa in der durch die Bodenplatte bestimmten Radialebene des Standrohres. Durch diese Art der Abstützung der Bodenplatte können außerordentlich große in Richtung der Mittel-Längs-Achse der Säule wirkende Kräfte über den Rand auf das Standrohr übertragen werden. Durch die vorteilhafte Ausbildung eines kleinen zylindrischen Abschnittes wird sichergestellt, daß die Stirnseite eine saubere Auflage für die Bodenplatte bildet.

Weitere Merkmale, Vorteile und Einzelheiten der Erfindung ergeben sich aus den Unteransprüchen und der nachfolgenden Beschreibung eines Ausführungsbeispiels anhand der Zeichnung. Es zeigen:

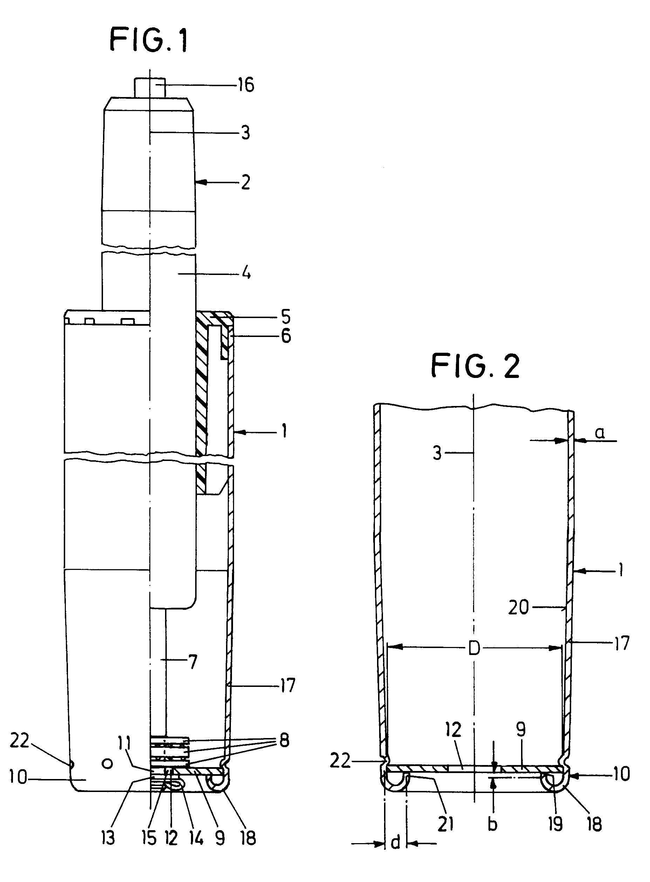

Fig. 1    eine Längsansicht einer teilweise aufgebrochen dargestellten Säule nach der Erfindung und

Fig. 2    einen Längsschnitt durch eine Teildarstellung eines Standrohrs der Säule.

Die in der Zeichnung dargestellte Stuhl-Säule weist ein Standrohr 1, in dem eine längenverstellbare Gasfeder als pneumatisches oder hydro-pneumatisches Kolben-Zylinder-Verstellelement angeordnet ist. Das Standrohr 1 und die Gasfeder 2 haben eine gemeinsame Mittel-Längs-Achse 3.

Ein äußeres Gehäuse 4 der Gasfeder 2 ist in Richtung der Achse 3 verschiebbar in einer Führungsbüchse 5 abgestützt, die an einem - in der Zeichnung oberen - Ende 6 des Standrohres 1 angeordnet ist. Bei diesem äusseren Gehäuse 4 der Gasfeder 2 kann es sich um deren Gehäuse selber handeln oder um ein dieses außen umgebendes Schutzrohr.

Aus dem Gehäuse 4 der Gasfeder ragt eine Kolbenstange 7 heraus, die über ein Axial-Wälzlager 8 gegenüber einer Bodenplatte 9 des Standrohres 1 in Richtung der Achse 3 abgestützt ist. Die Bodenplatte 9 befindet sich an dem dem einen Ende 6 entgegengesetzten anderen - in der Zeichnung unten dargestellten - Ende 10 des Standrohres 1. Ein das Axial-Wälzlager 8 durchsetzender Zapfen 11 der Kolbenstange 7 erstreckt sich durch eine zur Achse 3 konzentrisch ausgebildete Öffnung 12 der Bodenplatte 9. Er ist gegen die Unterseite der Bodenplatte 9 mittels einer Beilagscheibe 13 und eines Feder-Sicherungsrings 14 gegen ein Herausziehen gesichert. Der Durchmesser der Öffnung 12 ist größer als der Durchmesser des Zapfens 11. Durch diese geschilderte Befestigung ist die Gasfeder 2 gegenüber dem Standrohr 1 drehbar. Sie ist aufgrund des radialen Spiels 15 zwischen Zapfen 11 und Öffnung 12 in geringem Maße gegenüber dem Standrohr 1 neigbar, also verkantungsfrei in der Führungsbüchse 5 geführt. Sie ist schließlich mit ihrer Kolbenstange 7 in Richtung der Achse 3 gegenüber dem Standrohr 1 festgelegt, so daß bei Längenverstellungen der Gasfeder 2 durch Betätigung eines Betätigungsstiftes 16 das Gehäuse 4 der Gasfeder 2 aus dem Standrohr 1 herausgefahren oder in dieses hineingeschoben wird. Der Betätigungsstift 16 befindet sich an dem der Kolbenstange 7 entgegengesetzten Ende des Gehäuses 4 der Gasfeder 2. Hier wird auch ein Stuhlsitz oder eine Tischplatte befestigt.

Das Standrohr 1 weist benachbart zum Ende 10 einen sich zu diesem hin leicht konisch verjüngenden Konusabschnitt 17 auf, mittels dessen eine Befestigung des Standrohres 1 in einer entsprechenden Konusbüchse eines Stuhlkreuzes oder dergleichen möglich ist.

Soweit die primär als Stuhl-Säule, aber auch als Säule für Tische oder dergleichen dienende Säule bis hierher beschrieben ist, ist sie allgemein bekannt, handelsüblich und beispielsweise in der DE-PS 19 31 012 (entsprechend US-PS 3 711 054) oder der EP-PS 0 133 524 beschrieben und dargestellt.

Die ringscheibenförmige Bodenplatte 9 stützt sich auf einen topfförmig nach innen gerollten Rand 18 des Standrohres 1 im Bereich von dessen Ende 10 ab. Dieser nach innen gerollte Rand weist im Querschnitt etwa eine Halbkreisform auf, d. h. er hat etwa den Querschnitt eines Halb-Kreisrings.

Für das Verhältnis des Innendurchmessers D des Standrohres 1 in diesem Bereich zum mittleren Durchmesser d dieses halbkreisringförmigen Randes 18 gilt $5 \leq D/d \leq 10$. Die Bodenplatte 9 stützt sich auf der Stirnfläche 19 des Randes 18 ab, die vor dem Formen des Randes 18 die Stirnfläche des Standrohres 1 bildet. Die Bodenplatte 9 stützt sich also auf einer Stirnfläche 19 ab, die etwa einen radialen Abstand d zur Innenwand 20 des Standrohres 1 aufweist. Wie die Zeichnung anschaulich erkennen läßt, ist dadurch der radiale Abstand von der Krafteinbringungsstelle zwischen Wälzlager 8 und Bodenplatte 9 zur Stirnfläche 19 verhältnismäßig klein. Der etwa halbkreisförmig gebogene Rand 18 hat eine außerordentlich hohe Steifigkeit, also Verformungsfestigkeit, in Richtung der Achse 3, so daß auch bei Aufbringung hoher Kräfte auf das obere, dem Betätigungsstift 16 benachbarte Ende des Gehäuses 2, die über das Wälzlager 8 auf die Bodenplatte 9 und von dieser in das Standrohr 1 übertragen werden, Verformungen dieses Randes 18 ausgeschlossen sind.

Für den mittleren Durchmesser d gilt $4\ mm \leq d \leq 6\ mm$. Für den Innendurchmesser D des Standrohres 1 an der genannten Stelle gilt $40\ mm \leq D \leq 60\ mm$. Für die Wanddicke a des Standrohres 1 gilt $1,5\ mm \leq a \leq 2,5\ mm$. Der Rand 18 kann im Endbereich der Stirnfläche 19 einen kleinen zylindrischen Abschnitt 21 aufweisen, der konzentrisch zur Mittel-Längs-Achse 3 verläuft. Die Ausbildung eines solchen Abschnittes 21 hängt damit zusammen, daß der unmittelbar der Stirnfläche 19 benachbarte Bereich nicht auf einem Kreisbogen biegbar ist. Die Ausbildung dieses Abschnitts 21 hat also fertigungstechnische Gründe.

Um ein Herausziehen der Bodenplatte 9 nach oben aus dem Standrohr 1 zu verhindern, sind unmittelbar oberhalb der Bodenplatte 9 im Standrohr 1 aus dessen Innenwand 20 vorragende Vorsprünge 22 ausgebildet, die durch Eindrücken von außen erzeugt werden können. Beispielsweise können sechs solcher Vorsprünge 22 gleichmäßig auf dem Umfang verteilt vorgesehen sein. Diese Maßnahme dient dazu zu verhindern, daß beispielsweise bei einem Hochheben des Stuhls an seinem Sitzteil die Gasfeder 2 mit Bodenplatte 9 aus dem Standrohr 1 nach oben herausgezogen wird. Diese Vorsprünge 22 haben also keine größeren Kräfte, sondern nur das Gewicht des Standrohres 1 mit einem daran befestigten Fußkreuz aufzunehmen.

Die Erstreckung b des zylindrischen Abschnitts 21 in Richtung der Achse 3 ist erheblich geringer als der mittlere Durchmesser d des Randes 18. Es gilt $2 \leq d/b \leq 4$.

## Patentansprüche

1. Längenverstellbare Säule für Stühle, Tische oder dergleichen, mit einem Standrohr (1) und mit einem konzentrisch zu einer gemeinsamen Mittel-Längs-Achse (3) hierin angeordneten, pneumatischen oder hydropneumatischen Längenverstellelement, dessen Gehäuse (4) im Standrohr (1) radial abgestützt und in Richtung der Achse (3) verschiebbar geführt ist und dessen Kolbenstange (7) im Bereich ihres freien Endes an einer Bodenplatte (9) des Standrohres (1) in Richtung der Achse (3) festgelegt ist, wobei die Bodenplatte (9) im Bereich des dem Austritt des Gehäuses (4) aus dem Standrohr (1) abgewandten Endes (10) des Standrohres (1) auf einem radial nach innen in das Standrohr (1) ragenden, durch eine Stirnfläche (19) begrenzten Rand (18) des Standrohres (1) abgestützt ist, dadurch gekennzeichnet, daß der Rand (18) im Querschnitt etwa halbkreisförmig unter Bildung einer in Richtung der Mittel-Längs-Achse (3) und in das Standrohr (1) hinein offenen Rinne nach innen gebogen ist und daß die Bodenplatte (9) auf der Stirnfläche (19) des Randes (18) abgestützt ist, wobei die Stirnfläche (19) zur Innenwand (20) des Standrohres (1) beabstandet ist.

2. Säule nach Anspruch 1, dadurch gekennzeichnet, daß zwischen der Stirnfläche (19) und dem im Querschnitt etwa halbkreisförmigen Rand (18) ein zylindrischer Abschnitt (21) geringer Erstreckung (b) in Richtung der Achse (3) ausgebildet ist.

3. Säule nach Anspruch 1 oder 2, dadurch gekennzeichnet, daß für das Verhältnis des Innendurchmessers (D) des Standrohres (1) im Bereich des Randes (18) zum mittleren Durchmesser (d) des Randes gilt: $5 \leq D/d \leq 10$.

## Claims

1. An adjustable-length column for chairs, tables or the like, having an upright tube (1) and a pneumatic or hydropneumatic length-adjusting element disposed in it concentrically with a common central longitudinal axis (3), the housing (4) of the length-adjusting element being radially supported in the upright tube (1) and guided displaceably in the direction of the axis (3), and the piston rod (7) of the element being secured in the vicinity of its free end to a bottom plate (9) of the upright tube (1) in the direction of the axis (3), wherein in the vicinity of the end (10) of the upright tube (1) remote from where the housing (4) leaves the upright tube (1), the bottom plate (9) is supported on a rim (18) of the upright tube (1) protruding radially inward into the upright tube (1) and defined by an end face (19), characterized in that the rim (18) is bent inward approximately semicircularly in cross-section, while forming a groove which is open in the direction of the central longitudinal axis (3) and inward into the upright tube (1), and that the bottom plate (9) is supported on the end face (19) of the rim (18), whereby the end face (19) is located at a distance from the inside wall (20) of the upright tube (1).

2. A column according to claim 1, characterized in that a cylindrical portion (21) of short length (b) in the direction of the axis (3) is embodied between the end face (19) and the rim (18) of approximately semicircular cross-section.

3. A column according to claim 1 or 2, characterized in that for the ratio of the inside diameter (D) of the upright tube (1) in the vicinity of the rim (18) to the mean diameter (d) of the rim, the following applies: 5≤D/d≤10.

**Revendications**

1. Colonne réglable en longueur pour chaises, tables ou similaire, comprenant un tube porteur (1) et un élément pneumatique ou hydropneumatique de réglage en longueur qui y est emmanché de manière concentrique à un axe longitudinal médian commun (3), dont le boîtier (4) prend appui radialement dans le tube porteur (1) et est guidé de manière coulissante dans le sens de l'axe (3) et dont la tige de piston (7) est immobilisée dans le sens de l'axe 3, dans la zone de son extrémité libre, contre la plaque de fond (9) du tube porteur (1), la plaque de fond (9) prenant appui, dans la zone de l'extrémité (10) du tube porteur (1) opposée à la sortie du boîtier (4) hors du tube porteur (1), sur un bord (18) qui pénètre dans le tube porteur (1) radialement vers l'intérieur et qui est limité par une surface frontale (19), caractérisée en ce que le bord (18) est replié vers l'intérieur avec une section transversale sensiblement semi-circulaire en formant une gouttière ouverte dans le sens de l'axe longitudinal médian (3) et vers l'intérieur du tube porteur (1), et en ce que la plaque de fond (9) prend appui sur la surface frontale (19) du bord (18), la surface frontale (19) étant distante de la paroi intérieure (20) du tube porteur (1).

2. Colonne selon la revendication 1, caractérisée en ce que, entre la surface frontale (19) et le bord (18) à section transversale sensiblement semi-circulaire, est ménagée une partie cylindrique (21) de faible extension (b) dans le sens de l'axe (3).

3. Colonne selon la revendication 1 ou 2, caractérisée en ce que le rapport entre le diamètre intérieur (D) du tube porteur (1) dans la zone du bord (18) et le diamètre moyen (d) du bord est : 5 ≤ D/d ≤ 10.

# FIG.1

# FIG. 2